# EUROPÄISCHE PATENTSCHRIFT

(11) **EP 2 390 112 B1**
(45) Veröffentlichungstag und Bekanntmachung des Hinweises auf die Patenterteilung: **17.07.2013**
(21) Anmeldenummer: 11165026.3
(22) Anmeldetag: 06.05.2011
(51) Int. Cl.: B60B 29/00

(54) **Hilfsmittel zum Ausrichten und Arretieren eines Kraftfahrzeugrades**
Aid for aligning and stopping a motor vehicle wheel
Moyen d'aide pour l'alignement et l'arrêt d'une roue de véhicule automobile

(30) Priorität: 28.05.2010 DE 102010021880
(43) Veröffentlichungstag der Anmeldung: 30.11.2011
(73) Patentinhaber: Krieger, Wolfgang, 93186 Pettendorf/Adlersberg (DE)
(72) Erfinder: Krieger, Wolfgang, 93186 Pettendorf/Adlersberg (DE)
(74) Vertreter: Bittner, Bernhard

(56) Entgegenhaltungen:
- DE-A1- 4 233 700
- DE-A1- 4 420 343
- GB-A- 766 928
- US-A- 1 624 356

## Beschreibung

Die Erfindung betrifft ein Hilfsmittel zum Ausrichten und Arretieren eines Kraftfahrzeugrades an eine Radnabe eines Fahrzeuges, wobei das Hilfsmittel mindestens einen Bolzen und mindestens einen Arretierungskörper umfasst.

Ein notweniger Wechsel von Rädern aufgrund beispielsweise einer Reifenpanne oder durch den jahreszeitlich notwendigen Austausch von Winter- bzw. Sommerreifen erfordert aufgrund der aktuell verwendeten Räder mit Radschrauben einen erhöhten Kraftaufwand sowie den Einsatz von mindestens einer zweiten Person zum Ausrichten und Arretieren des Reifens an der Radnabe, während die erste Person die Radschrauben durch die Felgenlöcher in die Gewindebohrungen der Radnabe einschraubt, um das Rad an der Radnabe zu befestigen.

Um den Reifenwechsel zu vereinfachen sowie bei schlechten Witterungsbedingungen wie beispielsweise bei Dunkelheit oder bei starkem Regen zu beschleunigen, beschreibt der Stand der Technik unterschiedliche Konzepte.

Demnach offenbart DE 200 14 480 U1 ein Zentriermittel, welches mit seiner konisch zulaufenden Seite soweit durch ein Felgenloch hindurchgeführt wird, dass das Rad noch mittels des Zentriermittels angehoben werden kann. Danach wird das Rad an die Radnabe angebracht, wobei die Spitze des Zentriermittels in eine Gewindebohrung der Radnabe eingeführt wird. Folglich muss der Anwender das Zentriermittel mit dem Rad in der Gewindebohrung selbst halten, da hier kein Gewinde beschrieben wird, womit das Zentriermittel in die Gewindebohrung eingedreht werden kann, um sich selbst zu arretieren. Demzufolge bedarf es einen erhöhten Kraftaufwand das Rad mittels des Zentriermittels in der zum Einschrauben der Radschrauben erforderlichen Position zu halten und gleichzeitig das Rad mittels der Radschrauben an der Radnabe zu befestigen.

Die gattungsgemäße DE 42 33 700 A1 und die DE 44 20 343 A1 beschreiben einen länglichen Bolzen, der an einer Seite ein Gewinde aufweist, welches in die Gewindebohrung der Radnabe eingeschraubt wird. Danach wird das Rad derart an der Radnabe angeordnet, dass der Bolzen ein Felgenloch durchdringt und folglich das Rad mittels des Bolzens nahe der Radnabe gehalten wird. Obwohl das Ausrichten des Rades im Wesentlichen von diesen Bolzen ermöglicht wird, ist das Rad jedoch immer noch beweglich, da es lediglich auf dem Bolzen aufgehängt ist und in jede Richtung schwingen kann. Folglich liegt das Rad nicht direkt an der Radnabe an, womit auch das Felgenloch und die Gewindebohrung nicht kongruent, d.h. konzentrisch übereinander angeordnet sind. Somit besteht die Gefahr, dass die einzuschraubenden Radschrauben sich aufgrund der angewinkelten Einschraublage verkanten, wobei beispielsweise die Gewinde der Radschrauben dauerhaft beschädigt werden können. Beschädigte Radschraubengewinde sind insoweit gefährlich, da diese das Rad nicht mehr wie vorgesehen an der Radnabe befestigen können, womit es auch zu einem selbständigen Herausdrehen der Radschrauben und im ungünstigsten Fall zu einem Ablösen des Rades von der Radnabe kommen kann.

Eine weitere Möglichkeit zum Ausrichten eines Rades auf einer Radnabe wird in der WO 2008/075963 A1 beschrieben, wobei das darin offenbarte Werkzeug aus zwei Teilen besteht. Der erste Teil ist eine Art Bolzen auf dem ein hülsenförmiger Körper, nämlich der zweite Teil des Werkzeuges, aufgeschoben wird. Der Bolzen weist ein Gewinde auf, mit welchem der Bolzen in die Gewindebohrung der Radnabe eingeschraubt werden kann. Die Hülse wird soweit durch das Felgenloch geschoben, dass das Rad mittels der Hülse angehoben werden kann, danach wird die Hülse auf den Bolzen, welcher sich in der Radnabe in eingeschraubter Position befindet, aufgeschoben. Das Rad wird folglich nahe der Radnabe ausgerichtet. Jedoch werden hier zwei Werkzeuge gleichzeitig verwendet, um ein Anheben des Rades sowie ein Aufschieben der Hülsen auf die Bolzen zu ermöglichen. Dennoch erfolgt auch hier keine weitere Stabilisierung des Rades, so dass durch eine mögliche Bewegung des Rades bei der Montage eine Verschiebung zwischen den Zentren der Gewindebohrung und des Felgenloches erfolgen kann, wobei ein Einschrauben der Radschrauben ohne Verkannten derselben erschwert wird. Auch das Erfordernis, die Hülsen auf die Bolzen zu schieben, stellt eine Schwierigkeit besonders unter Berücksichtigung der Radschwere sowie der Toleranzen der Felgenlochdurchmesser und -abstände dar, womit das Ausrichten des Rades zeit- und kraftintensiv ist.

Demnach ist es die Aufgabe der Erfindung ein Hilfsmittel zur Verfügung zu stellen, welches das zu befestigende Kraftfahrzeugrad an der Radnabe positioniert, um einen Radwechsel noch weiter zu vereinfachen und zu erleichtern, als dies mit den Mitteln des vorliegenden Standes der Technik möglich ist. Somit soll ein Anwender befähigt werden ohne beispielsweise der Unterstützung einer zweiten Person ein Rad selbstständig wechseln zu können.

Weiterhin wird mittels der Arretierung des Rades an der Radfelge bei der Montage bzw. Demontage des Rades ein ungewolltes Ablösen des Rades von der Radnabe verhindert

Der Gegenstand der vorliegenden Erfindung stellt ein Hilfsmittel zum Ausrichten und Arretieren zur Verfügung, welches diese Aufgabe erfindungsgemäß entsprechend den Merkmalen des unabhängigen Patentanspruches 1 löst.

Das erfindungsgemäße Hilfsmittel zum Ausrichten und Arretieren eines Kraftfahrzeugrades an eine Radnabe besteht aus einem Bolzen und mindestens einem Arretierungskörper, wobei der Bolzen mindestens ein erstes Gewinde zum Einschrauben des Bolzens in eine der Gewindebohrungen der Radnabe sowie mindestens eine Arretierung zum Arretieren des Arretierungskörpers auf dem Bolzen aufweist.

Unter einem Kraftfahrzeugrad bzw. Rad wird hierbei eine Kraftfahrzeugfelge, welche eine Mehrzahl von Felgenlöchern aufweist gegebenenfalls mit dem auf der Felge montierten Reifen verstanden.

Das mindestens eine erste Gewinde des Bolzens zum Einschrauben des Bolzens in eine Gewindebohrung der Radnabe weist eine Gewindegröße auf, die der von handelsüblichen Gewindebohrungen in Radnaben entspricht und ist somit bevorzugt in einer Gewindegröße von M14x1,5 oder auch bevorzugt von M12x1,5 gebildet.

In einer weiteren Ausführungsform ist zusätzlich zu dem einen ersten Gewinde ein weiteres erstes Gewinde gebildet, welches an dem Bolzen an der dem einen ersten Gewinde gegenüberliegenden Seite gebildet ist. Dieses weitere erste Gewinde weist eine andere Gewindegröße, die kleiner oder größer als die Gewindegröße des einen ersten Gewindes ist, auf.

Somit wird gewährleistet, dass aufgrund von zwei an dem Bolzen unterschiedlich gebildeten ersten Gewinden zum Einschrauben des Bolzens in die Gewindebohrungen der Radnabe das erfindungsgemäße Hilfsmittel bei der Montage bzw. Demontage der verschiedenen Räder von verschiedenen Fahrzeugen, deren Radnaben meist unterschiedliche Gewindebohrungsgrößen aufweisen, Verwendung findet.

Die Arretierung zum Arretieren des Arretierungskörpers ist dabei bevorzugt in der Längsrichtung des Bolzens angeordnet und kann in einer bevorzugten Ausführungsform als ein zweites Gewinde ausgebildet sein. Somit dient die Arretierung bzw. das Arretierungsmittel bevorzugt zum Arretieren des Arretierungskörpers gegenüber dem Bolzen in der Längsrichtung des Bolzens.

Vorzugsweise weist das zweite Gewinde eine größere Steigung als das erste Gewinde auf, womit der Arretierungskörper schnell und einfach über den Bolzen bewegt und arretiert werden kann, da mittels diesem Gewinde, welches bevorzugt als Steilgewinde gebildet ist eine relativ große axiale Bewegung des Arretierungskörper pro Umdrehung des Arretierungskörper um den Bolzen herum, erfolgt. Jedoch ist die Gewindesteigung derart beschränkt, dass ein selbstständiges und ungewolltes Lösen bzw. Abschrauben des Arretierungskörpers von dem Bolzen, insbesondere auch unter der Krafteinwirkung der Felge verhindert wird.

In einer weiteren Ausführungsform des erfindungsgemäßen Hilfsmittels ist die Arretierung beispielsweise als Längsnut in dem Bolzen ausgebildet, wobei der Arretierungsköper auf den Bolzen bis zum Ende der Längsnut aufgeschoben werden kann und dort entweder durch Kraftschluss oder Formschluss verdreh- und/oder verschiebfest mit dem Bolzen verbunden ist, so dass ein ungewolltes selbstständiges Lösen des Arretierungskörpers von dem Bolzen verhindert wird.

Bevorzugt weist der Arretierungskörper, der bevorzugt als Hohlkörper gebildet ist, Eingriffselemente auf, welche an der inneren Oberfläche des Arretierungskörpers angeordnet sind oder die Wandung des Arretierungsköpers von der äußeren Oberfläche bis zur inneren Oberfläche durchdringen und derart in das Gewinde oder die Längsnut des Bolzens eingreifen, dass der Arretierungskörper auf den Bolzen aufgeschraubt oder aufgeschoben werden kann.

Bei den beschriebenen Ausführungsformen ist das zweite Gewinde in dem Bolzen gebildet und ein an dem Arretierungskörper angeordnetes Eingriffselement greift in dieses Gewinde ein. Jedoch wäre es auch möglich, dass das zweite Gewinde in dem Arretierungsköper bzw. in dessen inneren Oberfläche gebildet ist und ein an dem Bolzen angeordneter Vorsprung bzw. ein Eingriffselement in das zweite Gewinde eingreift.

Damit weist bevorzugt der Arretierungskörper einen Aufnahmeraum zum Aufnehmen des Bolzens auf.

Vorteilhaft können die Eingriffselemente als federnde Druckstücke ausgebildet sein, so dass ein Überdrehen und Beschädigen des Arretierungskörpers bzw. des zweiten Gewindes ausgeschlossen werden kann, indem bei einem zu festen Anziehen des Arretierungskörpers dieser mittels den federnden Druckstücken in den letzen Gewindegang zurückspringt und folglich erneut angezogen werden kann.

Vorteilhaft sind wenigstens zwei derartige federnde Druckstücke vorgesehen.

Der Arretierungskörper weist weiterhin bevorzugt mindestens einen Bereich auf, dessen geometrischer Querschnitt derart gebildet ist, dass dieser Bereich das Felgenloch nicht durchdringen kann und folglich ein Anpressen des Rades bzw. der Radfelge an die Radnabe ermöglicht, wenn der Arretierungskörper auf den Bolzen aufgeschoben bzw. aufgeschraubt wird, während der Bolzen in der Gewindebohrung verschraubt und das Rad über das Felgenloch auf den Bolzen aufgeschoben ist.

Bevorzugt ist eine Stirnseite des Arretierungskörpers derart ausgeführt, dass diese das Felgenloch nicht durchdringen kann.

Folglich weist der Arretierungskörper, um auf den Bolzen aufgeschraubt oder aufgeschoben werden zu können einen Innendurchmesser auf, der größer ist als der Außendurchmesser des Bolzens bzw. einen derart ausgeformten hohlen Innenraum, der sich ohne Spiel über den Bolzens schieben lässt.

Bevorzugt weist der Bolzen eine im Wesentlichen kreiszylindrische Form auf, wobei er jedoch auch jede beliebig andere Form aufweisen kann, die sich im Querschnitt als Dreieck, Viereck, Fünfeck oder n-Eck oder als Ellipse darstellt. Jedoch ist mindestens der Bereich des Bolzens, auf welchem das erste Gewinde zum Einschrauben des Bolzens in die Gewindebohrung angeordnet ist kreiszylindrisch ausgestaltet, um ein Einschrauben des Bolzens in die Gewindebohrung zu ermöglichen.

Weiterhin weist der gesamte Querschnitt des Bolzens einen geringeren Durchmesser auf als der Felgenlochdurchmesser, damit ein Lagern des Rades auf dem Bolzen durch ein Aufschieben des Rades auf den Bolzen durch das Felgenloch hindurch ermöglicht werden kann.

In einer bevorzugten Ausführungsform ist der Bolzen im Bereich mindestens einer der Grundflächen konisch verjüngt, wodurch, wenn diese Verjüngung im Bereich der Grundfläche, die sich auf der Seite des einen ersten Gewindes befindet, gebildet ist, sich der Bolzen einfach in die Gewindebohrung der Radnabe einführen und danach einschrauben lässt und, wenn diese Verjüngung im Bereich der Grundfläche, die sich auf der Seite der Arretierung befindet, gebildet ist, der Arretierungskörper sich einfach auf den Bolzen aufstecken und anschließend festschrauben oder weiter aufschieben lässt. Demnach dient eine solche konische Verjüngung als Einführhilfe des Bolzens in die Gewindebohrung und/oder als Aufsteckhilfe des Arretierungskörpers auf den Bolzen.

Eine ähnlich ausgeformte konische Verjüngung kann beispielsweise auch im vorderen, dem während der Verwendung des erfindungsgemäßen Hilfsmittels der Radfelge zugewandten Bereich des Arretierungskörpers gebildet sein, wobei diese Verjüngung anders als beim Bolzen einen Bestandteil der Arretierung darstellt und dazu dient, dass der Arretierungskörper derart weit das Felgenloch durchdringt, bis aufgrund des stetig zunehmenden Außendurchmessers der Verjüngung in Richtung des hinteren, der Radfelge abgewandten Bereiches des Arretierungskörpers das Felgenloch soweit auf die Verjüngung des Arretierungskörpers geschoben wird, bis ein Bereich des Arretierungskörpers, dessen Querschnitt den Felgenlochdurchmesser nicht durchdringen kann, erreicht wird und folglich eine weitere Vorschubbewegung des Arretierungskörpers nicht mehr möglich ist. Damit kommt es zu einem Einklemmen des Rades bzw. der Radfelge zwischen dem Arretierungskörper und der Radnabe, wodurch die Radfelge derart an die Radnabe des Fahrzeuges angedrückt wird, dass eine Bewegung des Rades nahezu ausgeschlossen ist.

Daraufhin kann der Anwender die Radschrauben mühelos in die verbleibenden drei bzw. vier Gewindebohrungen einschrauben, um damit das Rad an der Radnabe zu befestigen.

Der Bolzen besteht bevorzugt aus Metall oder einem anderen bruchfesten und stark beanspruchbaren Material, um selbst schwerste Kraftfahrzeugreifen während der Montage oder Demontage des Rades an oder von der Radnabe ausrichten und arretieren zu können. Dagegen besteht der Arretierungskörper aus einem weicheren Material als der Bolzen, da dieser das Gewicht des Rades nicht tragen muss, sondern lediglich als Arretierung gegen ein mögliches Verrutschen des Rades während der Montage oder Demontage des Rades dient.

Somit besteht der Arretierungskörper bevorzugt aus einem Kunststoff, welcher sich beispielsweise durch seine einfache Bearbeitbarkeit bei der Herstellung des Arretierungskörpers und sein geringes Gewicht auszeichnet.

Aufgrund der begrenzten Maße und des geringen Gewichtes des erfindungsgemäßen Hilfsmittels kann dieses platzsparend in jedem Fahrzeug integriert werden und erfordert bei der Verwendung keine zusätzliche Muskelkraft, so dass es in allen Personenkreisen Anwendung findet.

Um beispielsweise die Griffigkeit des Arretierungskörpers zu erhöhen, weist dieser in einer weiteren Ausführungsform zumindest teilweise eine strukturierte Außenoberfläche auf.

Bei verschmutzten oder gar verrosteten Gewindebohrungen in der Radnabe kann ein Einschrauben bzw. Herausschrauben des Bolzens erschwert werden, da hier die Gewinde nicht störungsfrei ineinander greifen können. Um folglich ausreichend Kraft bei der Ein- bzw. Ausdrehbewegung auf den Bolzen aufbringen zu können, ist in einer weiteren Ausführungsform des Bolzens in der Grundfläche auf der Seite der Arretierung oder auch auf beiden Seiten eine durchgehende Nut gebildet, in die ein Stift eingreifen kann, welcher mittels Bohrungen, die am hinteren Bereich des Arretierungskörpers gebildet sind, gehalten wird. Somit dient der Arretierungskörper als verlängerter Arm des Bolzens und überträgt die Drehbewegung, die auf den Arretierungskörper aufgebracht wird an den Bolzen weiter.

Weitere Vorteile, Ziele und Eigenschaften der vorliegenden Erfindung werden anhand nachfolgender Beschreibung anliegender Zeichnung erläutert, in welcher beispielhaft eine bevorzugte Ausführungsform eines erfindungsgemäßen Hilfsmittels zum Ausrichten und Arretieren von Kraftfahrzeugreifen an Radnaben sowie ein Bolzen und ein Arretierungskörper in einer bevorzugten Ausführungsform des Hilfsmittels dargestellt sind.

In den Figuren zeigen:
- Fig. 1: eine Seitenansicht eines Bolzens in einer bevorzugten Ausführungsform eines erfindungsgemäßen Hilfsmittels,
- Fig. 2: eine Seitenansicht des Bolzens aus Fig. 1, welcher 90° um seine Längsachse gedreht ist,
- Fig. 3: eine Draufsicht von unten auf einen Querschnitt des Bolzens aus Fig.2,
- Fig. 4: eine Seitenansicht eines Arretierungskörpers in einer bevorzugten Ausführungsform eines erfindungsgemäßen Hilfsmittels,
- Fig. 5: eine Seitenansicht des Arretierungskörpers aus Fig.4, welcher 90° um seine Längsache gedreht ist,
- Fig. 6: eine Draufsicht auf einen Querschnitt des Arretierungskörpers aus Fig.4, und
- Fig. 7: eine Zusammenbauzeichnung eines erfindungsgemäßen Hilfsmittels in einer bevorzugten Ausführungsform.

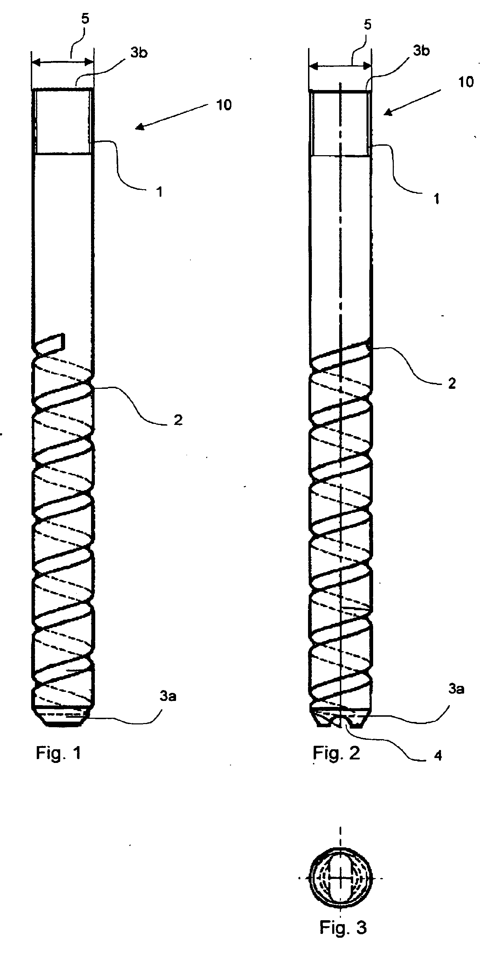

Fig. 1 zeigt eine Seitenansicht eines Bolzens 10 in einer bevorzugten Ausführungsform eines erfindungsgemäßen Hilfsmittels 30, wobei der Bolzen 10 ein erstes Gewinde 1 zum Einschrauben des Bolzens in die Gewindebohrung der Radnabe und ein zweites Gewinde 2 zum Arretieren des Arretierungskörpers auf dem Bolzen 10 aufweist.

Weiterhin können gemäß Fig. 1 konische Verjüngungen 3a, 3b in Bereichen der Grundflächen des Bolzens 10 gebildet sein, die jeweils als Einführhilfen zum Einführen des Bolzens 10 in die Gewindebohrung der Radnabe oder zum Aufbringen des Arretierungskörpers 20 auf den Bolzen 10 dienen.

Der in Fig. 1 dargestellte Bolzen 10 ist in Fig. 2 lediglich 90° um seine Längsachse gedreht, wobei gleiche Bezugszeichen die gleichen Merkmale des Bolzens 10 beschreiben.

Zusätzlich ist in Fig. 2 eine Nut 4 abgebildet, die in der Position des Bolzens in Fig.1 nicht sichtbar ist und zum Formschluss des Bolzens 10 mit einem in einer Ausführungsform des Arretierungskörpers 20 in dem hinteren Bereich des Arretierungskörpers 20 befindlichen Stift (hier nicht dargestellt) dient. Erfolgt ein Einbringen des Stiftes in die Nut 4 kann mit Hilfe des Arretierungskörpers 20 der Bolzen 10 in die Gewindebohrung der Radnabe hinein oder aus dieser herausgedreht werden. Folglich erhöht sich die bei der Drehung auf den Bolzen 10 aufgebrachte Kraft, so dass auch beispielsweise ein Bolzen 10, der sich in der Gewindebohrung verklemmt hat, einfacher aus dieser zu lösen ist.

Die Fig. 3 zeigt eine Draufsicht von unten auf einen Querschnitt des Bolzens 10 in einer bevorzugten Ausführungsform des Hilfsmittels 30, wobei verdeutlich wird, dass der Bolzen 10 in dieser bevorzugten Ausführungsform im Wesentlichen kreiszylindrisch geformt ist.

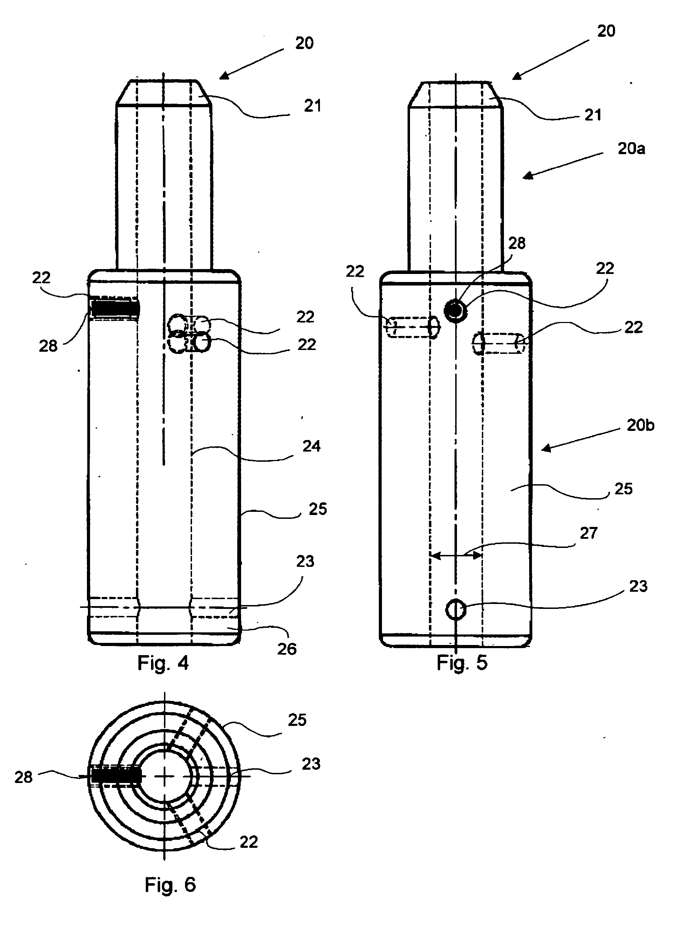

In Fig. 4 ist ein Arretierungskörper 20 in einer bevorzugten Ausführungsform des Hilfsmittels 30 dargestellt, welcher mindestens drei Eingriffselemente 28 (hier nur eines der möglichen Eingriffselemente dargestellt) bzw. deren Aussparungen 22 oder Bohrungen 22 aufweist, wobei die Eingriffselemente 28 derart an der inneren Oberfläche 24 bzw. von der äußeren Oberfläche 25 bis zur inneren Oberfläche 24 des Arretierungskörpers 20 angeordnet sind, dass diese in das zweite Gewinde 2 des Bolzens 10 eingreifen können. D.h., dass die Eingriffselemente 28 bzw. deren Aussparungen 22 derart in Längsrichtung des Arretierungskörpers 20 versetzt angeordnet sind, um beispielsweise in ein Steilgewinde eingreifen zu können, so dass der Arretierungskörper 20 mittels der Eingriffselemente 28 auf den Bolzen 10 mit dem zweiten Gewinde 2 aufgeschraubt werden kann.

Jedoch ist es auch möglich, dass anstatt der drei Eingriffselemente 28 nur ein einzelnes Eingriffselement 28 oder auch zwei Eingriffselemente 28 angeordnet sind.

Weiterhin wird in Fig. 4 eine konische Verjüngung 21 des Arretierungskörpers 20 dargestellt, die beim Aufbringen des Arretierungskörpers 20 auf den Bolzen 10, der in eine Gewindebohrung einer Radnabe eingeschraubt ist und ein Rad ausrichtet, das Rad an die Radnabe angedrückt, indem die Verjüngung 21 teilweise in das Felgenloch eindringt.

Die Bohrung 23, die in Fig.4 lediglich mittels einer gestrichelten Linie dargestellt wird, durchdringt die Wandung 26 des Arretierungskörpers 20 jeweils von der äußeren Oberfläche 24 bis zur inneren Oberfläche 24 auf beiden Seiten. Somit kann ein Stift (hier nicht dargestellt) in diese Bohrungen 23 aufgenommen werden, der sich folglich über den gesamten Querschnitt des Arretierungskörpers 20 erstreckt. Dieser in Fig. 4 nicht dargestellte Stift dient dazu eine formschlüssige Verbindung mit der in Fig.2 dargestellten Nut 4 einzugehen, um beim Ein- und/oder Ausdrehen des Bolzens 10 in bzw. aus der Gewindebohrung der Radnabe ausreichend Kraft auf den Bolzen 10 aufbringen zu können.

Der in Fig. 5 dargestellte Arretierungskörper 20 entspricht dem Arretierungskörper 20 aus Fig.4, jedoch ist dieser 90° um seine Längsachse gedreht dargestellt, wobei die in Längsrichtung des Arretierungskörpers unterschiedlich angeordneten Eingriffselemente 28 bzw. deren Aussparungen 22 verdeutlicht werden.

Fig. 4 und Fig. 5 zeigen, dass der Arretierungskörper 20 im Querschnitt unterschiedlich gebildete Abschnitte aufweisen kann, so dass eine durchgängige Form des Arretierungskörpers nicht erforderlich ist. Demnach weist der vordere Bereich 20a des Arretierungskörpers 20 in dieser Ausführungsform einen deutlich kleineren Außendurchmesser als der hintere Bereich 20b des Arretierungskörpers 20 auf. Bevorzugt weisen jedoch beide Abschnitte 20a und 20b des Arretierungskörpers 20 einen identisch großen Innendurchmesser 27 bzw. Bohrung 27 auf, damit ein ungehindertes Aufschrauben bzw. Aufschieben des Arretierungskörpers 20 auf den Bolzen 10 erfolgen kann.

Eine Draufsicht auf einen Querschnitt des Arretierungskörpers 20 zeigt Fig. 6, wobei verdeutlicht wird, dass es sich bei dieser Ausführungsform um eine zylindrische Ausgestaltung des Arretierungskörpers 20 handelt, dessen Wandung 26 von den Eingriffselementen 28 bzw. deren Aussparungen 22 sowie der Bohrung 23 zur Aufnahme eines Stiftes durchdrungen wird.

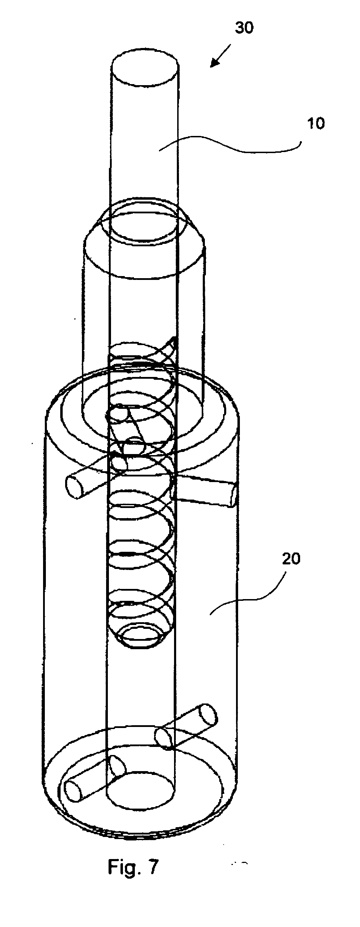

Fig. 7 zeigt das erfindungsgemäße Hilfsmittel 30 in einer bevorzugten Ausführungsform in einer Zusammenbauzeichnung, wobei der Arretierungskörper 20 auf den Bolzen 10 aufgedreht wurde.

Der Anmelder behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: erstes Gewinde
- 2: zweites Gewinde (Steilgewinde)
- 3a: Verjüngung im Bereich der Grundfläche beim Steilgewinde
- 3b: Verjüngung im Bereich der Grundfläche beim ersten Gewinde
- 4: Nut
- 5: Außendurchmesser
- 10: Bolzen
- 20: Arretierungskörper
- 20a: vorderer Bereich des Arretierungskörpers
- 20b: hinterer Bereich des Arretierungskörpers
- 21: Verjüngung
- 22: Aussparung bzw. Bohrung
- 23: Bohrung
- 24: innere Oberfläche der Wandung
- 25: äußere Oberfläche der Wandung
- 26: Wandung
- 27: Innendurchmesser bzw. Bohrung
- 28: Eingriffselement
- 30: Hilfsmittel

## Patentansprüche

1. Hilfsmittel (30) zum Ausrichten und Arretieren eines Kraftfahrzeugrades, welches eine Mehrzahl von Felgenlöchern aufweist an eine Radnabe, welche eine Mehrzahl von Gewindebohrungen aufweist,
**dadurch gekennzeichnet, dass**
das Hilfsmittel (30) mindestens einen Bolzen (10) und mindestens einen Arretierungskörper (20) umfasst, wobei der Bolzen (10) mindestens ein erstes Gewinde (1) zum Einschrauben des Bolzens (10) in eine der Gewindebohrungen sowie mindestens eine Arretierung (2) zum Arretieren des Arretierungskörpers (20) auf dem Bolzen (10) aufweist.

2. Hilfsmittel (30) gemäß Anspruch 1,
**dadurch gekennzeichnet, dass**
die Arretierung (2) des Bolzens (10) als mindestens ein zweites Gewinde (2) ausgebildet ist.

3. Hilfsmittel (30) gemäß Anspruch 2,
**dadurch gekennzeichnet, dass**
das zweite Gewinde (2) eine größere Steigung als das erste Gewinde (1) aufweist.

4. Hilfsmittel (30) gemäß Anspruch 2 oder 3,
**dadurch gekennzeichnet, dass**
der Arretierungskörper (20) Eingriffselemente (28), welche derart an der Oberfläche der Innenseite (24) angeordnet sind, dass sie in das zweite Gewinde (2) des Bolzens (10) eingreifen, aufweist.

5. Hilfsmittel (30) gemäß Anspruch 4,
**dadurch gekennzeichnet, dass**
die Eingriffselemente (28) als federnde Druckstücke ausgebildet sind.

6. Hilfsmittel (30) nach einem der vorangegangenen Ansprüche,
**dadurch gekennzeichnet, dass**
mindestens ein Bereich des Arretierungsköpers (20) einen derartigen geometrischen Querschnitt aufweist, der den Felgenlochdurchmesser nicht durchdringen kann.

7. Hilfsmittel (30) nach einem der vorangegangenen Ansprüche,
**dadurch gekennzeichnet, dass**
der Arretierungskörper (20) einen Innendurchmesser (28) aufweist, welcher größer ist als der Außendurchmesser (5) des Bolzens (10).

8. Hilfsmittel (30) nach einem der vorangegangenen Ansprüche,
**dadurch gekennzeichnet, dass**
der Arretierungskörper (20) aus Kunststoff ist.

9. Hilfsmittel (30) nach einem der vorangegangenen Ansprüche,
**dadurch gekennzeichnet, dass**
der Bolzen (10) aus Metall ist.

10. Hilfsmittel (30) nach einem der vorangegangenen Ansprüche,
**dadurch gekennzeichnet, dass**
der Arretierungskörper (20) eine Außenoberfläche (25) aufweist, welche zumindest teilweise strukturiert ist.

## Claims

1. An aid (30) for aligning and locking a wheel of a motor vehicle, which has a plurality of rim holes on a wheel hub which has a plurality of threaded bores, **characterized in that** the aid (30) comprises at least one pin (10) and at least one locking member (20), wherein the pin (10) has at least one first thread (1) for screwing the pin (10) into one of the threaded bores and at least one locking means (2) for locking the locking member (20) on the pin (10).

2. An aid (30) according to claim 1, **characterized in that** the locking means (2) of the pin (10) is designed in the form of at least one second thread (2).

3. An aid (30) according to claim 2, **characterized in that** the second thread (2) has a steeper pitch than the first thread (1).

4. An aid (30) according to claim 2 or 3, **characterized in that** the locking member (20) has engagement elements (28) which are arranged on the surface of the inner side (24) in such a way that they engage in the second thread (2) of the pin (10).

5. An aid (30) according to claim 4, **characterized in that** the engagement elements (28) are designed in the form of springing thrust members.

6. An aid (30) according to any one of the preceding claims, **characterized in that** at least one area of the locking member (20) has a geometrical cross-section such that it cannot pass through the diameter of the rim holes.

7. An aid (30) according to any one of the preceding claims, **characterized in that** the locking member (20) has an internal diameter (28) which is larger than the external diameter (5) of the pin (10).

8. An aid (30) according to any one of the preceding claims, **characterized in that** the locking member (20) is of plastics material.

9. An aid (30) according to any one of the preceding claims, **characterized in that** the pin (10) is of metal.

10. An aid (30) according to any one of the preceding claims, **characterized in that** the locking member (20) has an external surface (25) which is textured at least in part.

## Revendications

1. Accessoire (30) pour l'alignement et le blocage d'une roue de véhicule automobile comportant une pluralité de trous de jante, au niveau d'un moyen de roue comportant une pluralité d'alésages filetés,
**caractérisé en ce que**
ledit accessoire (30) comprend au moins un axe (10) et au moins un corps de blocage (20), l'axe (10) comportant au moins un premier filet (1) pour le vissage de l'axe (10) dans un des alésages filetés ainsi qu'au moins un dispositif d'arrêt (2) pour la fixation du corps de blocage (20) sur l'axe (10).

2. Accessoire (30) selon la revendication 1,
**caractérisé en ce que**
le dispositif d'arrêt (2) de l'axe (10) est réalisé sous la forme d'au moins un deuxième filet (2).

3. Accessoire (30) selon la revendication 2,
**caractérisé en ce que**
le deuxième filet (2) dispose d'un pas supérieur à celui du premier filet (1).

4. Accessoire (30) selon la revendication 2 ou 3,
**caractérisé en ce que**
le corps de blocage (20) comporte des éléments d'engrenage (28), disposés à la surface de la face intérieure (24) de manière à s'engager dans le deuxième filet (2) de l'axe (10).

5. Accessoire (30) selon la revendication 4,
**caractérisé en ce que**
les éléments d'engrenage (28) sont réalisés sous forme de pièces d'appui élastiques.

6. Accessoire (30) selon l'une des revendications précédentes,
**caractérisé en ce qu'**
au moins une zone du corps de blocage (20) présente une section transversale de géométrie telle qu'elle ne peut s'engager dans le diamètre de trou de jante.

7. Accessoire (30) selon l'une des revendications précédentes,
**caractérisé en ce que**
le corps de blocage (20) présente un diamètre intérieur (28) supérieur au diamètre extérieur (5) de l'axe (10).

8. Accessoire (30) selon l'une des revendications précédentes,
**caractérisé en ce que**
le corps de blocage (20) est en matière synthétique.

9. Accessoire (30) selon l'une des revendications précédentes,
**caractérisé en ce que**
l'axe (10) est en métal.

10. Accessoire (30) selon l'une des revendications précédentes,
**caractérisé en ce que**
le corps de blocage (20) présente une surface extérieure (25) au moins partiellement profilée.
